(19) Europäisches Patentamt
European Patent Office
Office européen des brevets

(11) Numéro de publication: **0 252 807 B1**

(12) **FASCICULE DE BREVET EUROPEEN**

(45) Date de publication de fascicule du brevet: **13.05.92**   (51) Int. Cl.⁵: **G01S 5/04**, G01S 3/48

(21) Numéro de dépôt: **87401519.1**

(22) Date de dépôt: **01.07.87**

(54) **Installation pour la détection et la localisation spatiale par mesure interférométrique, en temps réel et à grande distance, des décharges de foudre.**

(30) Priorité: **10.07.86 FR 8610091**

(43) Date de publication de la demande:
**13.01.88 Bulletin 88/02**

(45) Mention de la délivrance du brevet:
**13.05.92 Bulletin 92/20**

(84) Etats contractants désignés:
**DE ES GB IT SE**

(56) Documents cités:
EP-A- 0 161 940          DE-A- 3 315 739
FR-A- 2 520 511          US-A- 3 325 813
US-A- 3 789 411          US-A- 3 973 262
US-A- 4 115 732

Radio Science, vol. 20, no. 2, pages 171-192,
mars-avril 1985, P. Richard et G. Auffray:
"Imagerie interférométique VHF-UHF, Application à l'imagerie de la foudre", Fascicule
ONERA TP no. 1985-80

(73) Titulaire: **Office National d'Etudes et de Recherches Aérospatiales (O.N.E.R.A.)
29 Avenue de la Division Leclerc
F-92320 Châtillon-sous-Bagneux(FR)**

(72) Inventeur: **Richard, Philippe
1, rue du Plat d'Etain
F-75001 Paris(FR)**
Inventeur: **Soulage, André
3, Square Frédéric Vallois
F-75015 Paris(FR)**
Inventeur: **Appel, Jean
9, rue Auguste Comte
F-92170 Vanves(FR)**

(74) Mandataire: **Gorree, Jean-Michel et al
Cabinet Plasseraud 84, rue d'Amsterdam
F-75009 Paris(FR)**

**Description**

La présente invention concerne le domaine de la détection et de la localisation spatiale par mesure interférométrique, en temps réel et à grande distance, des décharges de foudre, et plus particulièrement elle concerne une installation, pour une telle détection et localisation, qui comprend au moins deux stations de localisation angulaire des décharges, implantées à distance moyenne l'une de l'autre, chaque station comportant :

/ au moins deux antennes fixes de réception d'au moins un rayonnement électromagnétique de longueur d'onde prédéterminée engendré par les décharges de foudre, et

/ des moyens de traitement interférométrique des signaux délivrés par les antennes, agencés pour fournir une information représentative du site et/ou de l'azimut de la source de rayonnements électromagnétiques constituée par la décharge de foudre,

/ des moyens (31, 34) de validation à seuil sensibles à au moins une grandeur du rayonnement électromagnétique reçu (notamment sa densité d'émission et/ou son amplitude), agencés pour délivrer un signal de commande si ladite grandeur est supérieure à un seuil préétabli,

/ des moyens (30) de tri d'informations placés sous la dépendance des susdits moyens de validation à seuil, pour sélectionner les informations angulaires fournies par les moyens de traitement interférométrique uniquement lorsque la susdite grandeur est supérieure à sa valeur préétablie,

/ des moyens (30) de formation et de traitement de données numériques agencés pour que chacune de ces données numériques soit constituée par une information représentative du site et/ou de l'azimut, sélectionnée par les moyens de tri, et par une information représentant la date de la décharge de foudre,

/ des moyens (31) de stockage momentané des données numériques ainsi constituées, ces moyens de stockage retenant lesdites données numériques pendant un temps fonction du débit de transmission possible,

/ et des moyens (41, 42) de transmission, dans une ligne de transmission, des données numériques ;

- des lignes de transmission (43₁, 43₂, 43₃) reliant respectivement les susdites stations de localisation à un centre (4) d'acquisition des données numériques ; ce centre (4) d'acquisition des données numériques, comprenant :

/ des moyens (44₁-44₃ ; 45₁-45₃) de réception respectifs des données numériques en provenance des stations de localisation,

/ des moyens (46) pour trier et associer les informations ayant dans une plage de temps déterminée, la même date et provenant respectivement de stations de localisation différentes,

/ et des moyens (47) de stockage momentané des informations triées et associées, les moyens de stockage retenant ces informations pendant un temps fonction de la capacité de calcul ;

- des moyens de calcul (49) agencés pour déterminer par triangulation, à partir des informations de site et/ou d'azimut triées et associées, la position spatiale de la décharge de foudre survenue à ladite date;

- et des moyens (53-55) d'affichage des résultats fournis par les moyens de calcul.

Le principe connu de la localisation angulaire de sources VHF-UHF par interférométrie consiste à mesurer la différence de phase $\Delta\phi$ entre des signaux arrivant simultanément sur deux antennes. Il est alors possible de retrouver par le calcul l'angle d'incidence $\alpha$ de l'onde électromagnétique par rapport à l'axe passant par les deux antennes à l'aide de la relation : $\Delta\phi = 2\pi\ D/\lambda \sin\alpha$

où $D/\lambda$ est la distance entre antennes exprimée en longueur d'onde.

Une mesure de ce type permet une localisation de la source dans un cône centré sur l'axe passant par les deux antennes et d'angle au sommet $\alpha$. Une deuxième base interférométrique, c'est-à-dire une troisième antenne (puisqu'une même antenne est utilisée comme référence de phase), permet de retrouver la direction d'origine de la source, en azimut et en site. A partir des informations d'azimut et de site obtenues en deux stations de localisation il est alors possible, par un calcul en temps différé, de déterminer, par triangulation, la position spatiale de la source.

Une installation de localisation spatiale de décharges de foudre connue ("Imagerie interférométrique VHF-UHF, application à l'imagerie de la foudre", par P. Richard et G. Auffray, Radio Science ; vol. 20, N° 2, pages 171-192, mars-avril 1985) comprend deux stations de localisation angulaire des décharges, chacune des stations comportant deux ensembles de trois antennes. Le premier ensemble est constitué de trois antennes séparées mutuellement d'une distance relativement grande (par exemple 10 m pour une fréquence de fonctionnement de 300 MHZ) ; il permet une localisation précise de la source mais avec un grand nombre d'ambiguïtés (puisque la mesure de phase se fait à $2\pi$ près). Le deuxième ensemble est constitué de trois antennes séparées mutuellement d'une distance relativement courte (par exemple 0,5 m) et permet de lever les ambiguïtés de localisation du premier système.

Contrairement à tous les autres modes de localisation qui utilisent des mesures sur l'amplitude du signal (mesures de différence de temps d'arrivée, mesures de type goniométrique), la localisation interférométrique s'affranchit de la dépendance vis-à-vis des formes d'ondes des signaux de foudre, par des mesures portant uniquement sur la phase du signal. Cela permet des mesures sur de grandes dynamiques (typiquement 80 dB), ce qui s'adapte parfaitement aux importantes variations de niveau de signal dûes à la dynamique d'émission des sources, ainsi qu'à l'étendue importante du domaine de surveillance.

Toutefois, réalisée uniquement à des fins d'études et de recherches sur la phénoménologie de la foudre, cette installation connue possède des caractéristiques qui ne la rendent pas apte à une fonction opérationnelle de surveillance permettant d'assurer la protection d'un site. En particulier, ses résolutions temporelle et spatiale élevées sont superflues pour une installation de surveillance ; sa portée est insuffisante ; son coût est excessif ; et surtout le traitement des informations en temps différé est incompatible avec une fonction de surveillance.

Par ailleurs, on connaît également, d'après la demande de brevet EP-A-0161940, une installation de traitement de données agencée autour d'un calculateur numérique qui détermine, par triangulation, les coordonnées du point d'impact d'un éclair au sol, à partir de ses positions angulaires, en azimut, fournies par des stations goniométriques de localisation. Toutefois, le procédé de mesure utilisé, fondé sur des mesures d'amplitude, et les moyens mis en oeuvre dans chacune des stations ne permettent pas une localisation spatiale de l'ensemble des sources électromagnétiques associées à une décharge de foudre. En particulier, les stations de localisation décrites dans ce document comportent des antennes de réception du type "antennes cadres" qui ne fonctionnent correctement que lorsque la composante magnétique de l'onde à détecter est polarisée verticalement, ce qui se produit essentiellement au point d'impact de l'éclair au sol.

L'invention a donc essentiellement pour but de concevoir une installation pour la détection et la localisation spatiale, en temps réel et à grande distance, des décharges de foudre permettant d'assurer une fonction opérationnelle de surveillance avec une structure technique et une maintenance minima.

A cette fin, une installation agencée conformément à l'invention se caractérise en ce que les moyens de validation à seuil sont sensibles notamment à la densité d'émission et comprennent :

- des moyens de comptage agencés pour effectuer un comptage pendant une durée prédéterminée T à partir de leur mise en marche,
- des moyens de détection de la présence, sur les antennes de réception, d'un rayonnement électromagnétique à détecter,
- des moyens de déclenchement, commandés par les susdits moyens de détection, pour déclencher la mise en marche des susdits moyens de comptage,
- des moyens comparateurs pour comparer le signal de sortie des moyens de comptage à la fin d'un temps T avec un seuil prédéterminé,
- et des moyens de mémorisation du résultat de cette comparaison présentant un premier niveau de tension si le comptage est inférieur au seuil prédéterminé ou un second niveau de tension si le comptage est supérieur audit seuil.

Pour que l'installation conserve son efficacité quelle que soit la position de la décharge de foudre par rapport aux stations de localisation angulaire, il est avantageux que l'installation comporte au moins trois stations de localisation non mutuellement alignées, qu'elle comporte en outre des moyens pour déterminer les deux stations aptes à fournir, à une date donnée, la position spatiale avec la meilleure précision, et que les moyens de tri du centre d'acquisition des données numériques soient agencés pour sélectionner des couples d'informations de même date recueillies par les deux stations procurant à cette date la meilleure précision.

Pour accroître la précision des mesures effectuées, il est préférable que les stations de localisation possèdent respectivement des bases de temps synchronisées à partir d'une source de synchronisation commune et des moyens de prise en compte des retards respectifs subis par les signaux de synchronisation dans les lignes de transmission respectives.

Dans ce cas, on peut prévoir les dispositions qui suivent :

- la source de synchronisation commune comporte des moyens générateurs de signaux de synchronisation de forme sensiblement carrée, ayant une fréquence d'environ 1 Hz, de rapport cyclique sensiblement égal à 1 et modulé en fréquence, et des moyens de mémorisation qui contiennent des valeurs correspondant à une période élémentaire de la fréquence de modulation et qui sont adressés par un signal d'horloge constitué par le susdit signal de synchronisation,

- des moyens de liaison sont prévus entre la susdite source de synchronisation commune et les bases de temps respectives des stations de localisation pour transmettre auxdites bases de temps les signaux de sortie des moyens de mémorisation,
- et chaque base de temps d'une station de localisation comprend :
  / des moyens de filtrage et de mise en forme du signal reçu,
  / des moyens de détermination des instants de changement de fréquence dudit signal reçu,
  / des moyens de sélection pour sélectionner dans ce signal un signal stable de synchronisation,
  / des moyens de retard, couplés avec les moyens susmentionnés de prise en compte du retard introduit par la durée de la transmission dans les susdits moyens de liaison par rapport à la durée de transmission dans les moyens de liaison avec les autres stations de localisation,
  / et des moyens de sortie d'un signal, stable et compensé, de synchronisation de base de temps.

Dans le cas où l'on souhaite effectuer une détection omnidirectionnelle, il est possible de faire en sorte que chaque station de localisation comporte trois antennes simples omnidirectionnelles en azimut, ces antennes étant disposées en triangle et étant choisies parmi les types monopôle λ/4 sur plan, monopôle 5 λ/8 sur plan ou dipôle λ/2 (h étant la longueur d'onde du rayonnement électromagnétique à détecter). Dans ce cas, pour éviter des problèmes de couplage entre antennes, il est souhaitable que les antennes présentent une directivité en site relativement faible, notamment inférieure ou égale à 3 dB.

Par contre, dans le cas où l'on souhaite effectuer une détection directionnelle, il est possible de faire en sorte que chaque station de localisation comporte des antennes directionnelles en azimut, notamment agencées pour une détection dans un domaine angulaire limité ou bien agencées pour une détection isotrope en azimut par combinaison de plusieurs antennes pointées dans des directions complémentaires.

Avantageusement, les antennes de chaque station sont mutuellement écartées d'environ une demi-longueur d'onde du rayonnement à détecter.

On peut, en outre, faire en sorte que l'installation conforme à l'invention comprenne des moyens pour déterminer les différences de temps d'arrivée, au centre d'acquisitions des données numériques, des données numériques en provenance de stations de localisation différentes et que les moyens de calcul soient agencés pour utiliser ces informations de différences de temps d'arrivée conjointement avec les autres informations de site et/ou d'azimut triées et associées, de manière qu'il soit possible d'effectuer la localisation de la source de rayonnement électromagnétique constituée par la décharge de foudre à partir d'un système d'antennes ambigè, mais conférant une meilleure résolution angulaire.

Toujours dans le but d'éliminer au maximum les causes d'erreur ou d'incertitude et d'accroître la précision des mesures, on peut prévoir que l'installation comporte en outre des moyens d'étalonnage, incluant un émetteur de rayonnements électromagnétiques de la fréquence à détecter et des moyens de détection et de calcul du déphasage propre de l'installation, ce grâce à quoi il est possible d'en corriger les mesures.

L'invention sera mieux comprise à la lecture de la description détaillée qui suit d'un mode de réalisation préféré donné uniquement à titre d'exemple non limitatif ; dans cette description on se réfère aux dessins annexés sur lesquels :

- la figure 1 est une vue d'ensemble très schématique d'une installation conforme à l'invention ;
- la figure 2 est un schéma synoptique d'une station de mesure faisant partie de l'installation de la figure 1 ;
- les figures 3 à 5 sont des vues schématiques de différents systèmes d'antennes utilisables dans la station de mesure de la figure 2 ;
- la figure 6 est un schéma synoptique détaillé d'un exemple de réalisation d'une partie de la station de mesure de la figure 2 ;
- la figure 7 est un schéma électrique d'un exemple de réalisation d'une autre partie de la station de la figure 2 ;
- la figure 8 est un schéma synoptique d'une unité d'acquisition de données faisant partie de l'installation de la figure 1 ;
- la figure 9 est un schéma synoptique d'une unité de traitement de données en temps réel faisant partie de l'installation de la figure 1 ; et
- les figures 10 à 12 sont des schémas électroniques illustrant des modes de réalisation propres à assurer certaines fonctions dans l'installation de l'invention.

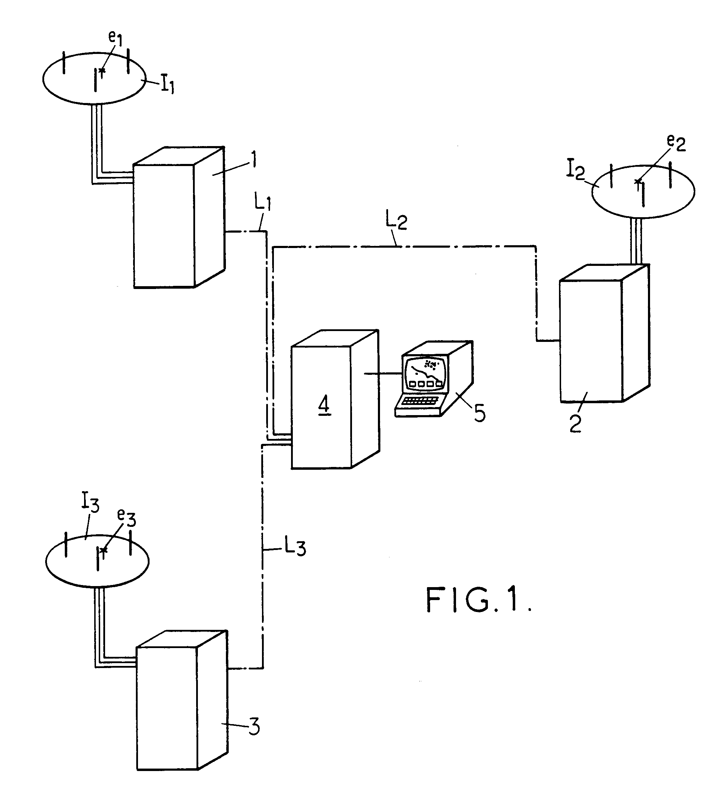

L'installation de détection et de localisation spatiale par voie interférométrique, en temps réel et à grande distance des décharges de foudre est représentée, dans son ensemble et de façon très schématique, à la fig. 1.

L'installation comprend un certain nombre de stations de mesure, représentées ici au nombre de trois référencées respectivement 1, 2 et 3, équipées respectivement d'antennes $I_1$, $I_2$, $I_3$, qui sont reliées par des lignes de transmission $L_1$, $L_2$ et $L_3$ à une unité centrale d'acquisition de données 4, elle-même reliée à une unité de traitement des données en temps réel 5.

La localisation de l'activité orageuse se faisant par triangulation, la géométrie d'implantation des stations de mesure est à optimiser en fonction de l'étendue du domaine d'observation, ainsi que de la disponibilité des sites d'implantation.

Elle est donc directement tributaire des performances de chaque station et en particulier de la distance de détection ; celle-ci dépend du niveau des sources de rayonnement VHF-UHF associées à la foudre, de l'altitude de ces sources (typiquement de 0 à 10 km) ainsi que de l'altitude de chaque station de réception. Pour des situations typiques, on peut estimer cette distance de détection de 150 km à 200 km.

Deux cas de figure principaux sont envisageables pour l'implantation des stations :

1 - Les stations de mesure sont à l'intérieur du domaine d'observation. Dans ce cas, chaque station a un domaine angulaire d'observation de 360° et utilise trois antennes de mesure mutuellement séparées d'une distance correspndant à une demi-longueur d'onde. La distance entre stations, qui peut être typiquement de 20 à 80 km, est optimisée en fonction de critères de précision de localisation dans le domaine étudié, de portée et d'implantation. Un minimum de deux stations est nécessaire, mais trois stations sont préférables afin d'éviter les zones angulaires pour lesquelles l'erreur de localisation par triangulation est grande (axe de chaque couple de stations).

2 - Les stations de mesures sont à l'extérieur du domaine d'observation. Dans ce cas, chaque station a un domaine angulaire d'observation inférieur à 180°, avec un site très faible ; on peut alors utiliser seulement deux antennes, de préférence directives, pour chaque station. La distance entre les antennes peut alors être choisie supérieure à une demi longueur d'onde afin d'améliorer la précision de localisation dans le domaine angulaire retenu.

La distance entre stations sera comparable aux dimensions du domaine d'observation (typiquement 100 à 200 km).

Deux stations sont suffisantes lorsque le domaine d'observation est à l'extérieur de l'axe des stations ; trois sont préférables dès lors que le domaine couvre des zones situées entre les stations.

La fréquence de fonctionnement de récepteur peut être choisie dans la gamme VHF-UHF, par exemple au voisinage de 140 MHz (d'où une demi longueur d'onde de l'ordre de 1 mètre).

Ce domaine de fréquence permet d'accéder à des sources de rayonnement présentes dans toutes les phases de l'éclair, et permet donc la localisation de l'ensemble des phénomènes de décharges atmosphériques comme les mécanismes précurseurs des foudroiements au sol, l'onde de retour de l'arc nuage-sol, ou les mécanismes intra-nuage.

Le fait, en particulier, de détecter les décharges intra-nuage est important car celles-ci représentent 80 à 90% de l'activité électrique d'un nuage d'orage ; cela présente également un intérêt en ce qui concerne les protections en vol d'avoins ou de fusées.

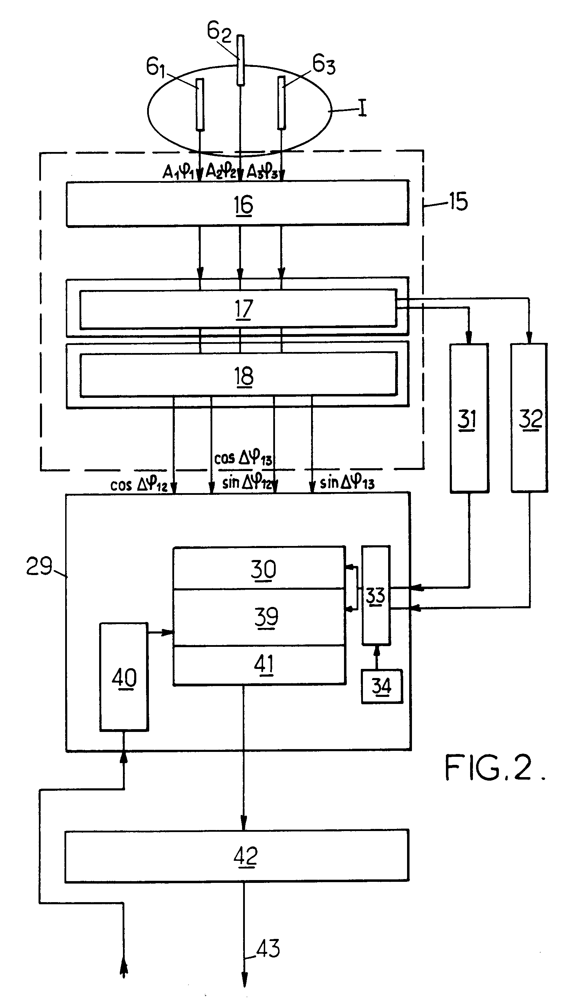

L'agencement général d'une station de mesure est représenté à la fig. 2. Cette station est équipée d'un système d'antennes I pour lequel deux configurations sont plus particulièrement à prendre en considération :

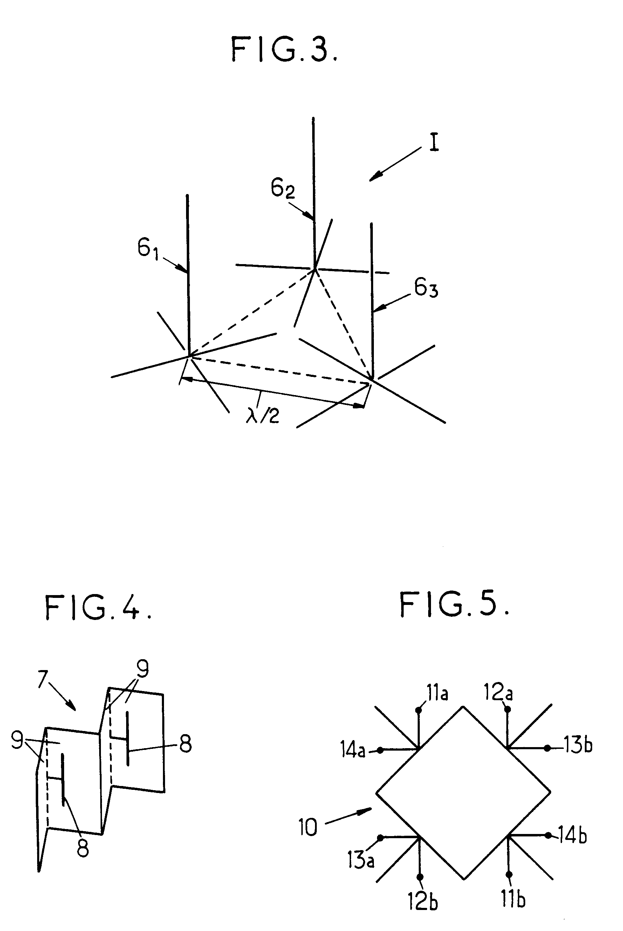

1°/ un premier système d'antennes (voir fig. 3) est constitué de trois antennes simples, $6_1$ à $6_3$, omnidirectionnelles en azimut, disposées aux sommets d'un triangle équilatéral dont les côtés ont une longueur d'environ $\lambda/2$ ; dans ce cas les antennes peuvent être du type monopôle $\lambda/4$ sur plan, monopôle 5 $\lambda/8$ sur plan, ou dipôle $\lambda/2$, présentant une légère directivité en site ($\leq 3$ dB). C'est ce type d'antenne qui est schématisé en I sur la fig. 2. Si l'on désire une directivité en site accrue, on peut envisager d'utiliser des antennes de type dipôles colinéaires isotropes en azimut, mais directives en site ( 6 à 8 dB) bien que dans ce cas les problèmes de couplage entre antennes soient plus difficiles à maîtriser,

2°/ un second système d'antennes est constitué d'antennes directionnelles en azimut. Un tel système 7 (représenté à la fig. 4) peut par exemple être du type dipôle $\lambda/2$, 8, avec réflecteur dièdre 9 constitué de feuilles métalliques planes, qui est apte à présenter un gain d'environ 10 dB et qui convient pour des observations dans un domaine angulaire limité. On peut également, si l'on désire l'isotropie en azimut, avoir recours à une antenne complexe 10 (montrée en vue de dessus à la fig. 5) combinant plusieurs couples d'antennes directives (11a, 11b ; 12a, 12b ; 13a, 13b ; 14a, 14b) pointées dans des directions complémentaires ; dans ce dernier cas les signaux provenant de deux antennes complémentaires sont combinés entre eux (ce qui revient à reconstituer une antenne omnidirectionnelle avec plusieurs antennes directives) : les antennes 11a et 11b fournissent un premier signal et les antennes 12a et 12b fournissent un deuxième signal, ces premier et deuxième signaux constituant un premier couple de signaux pour une première voie, tandis que les antennes 13a et 13b founissent un troisième signal et les antennes 14a et 14b fournissent un quatrième signal, ces troisième et quatrième signaux constituant un second couple de signaux pour une seconde voie ; on obtient ainsi deux couples interférométriques indépendants.

En revenant au schéma général d'une station de mesure représenté à la fig. 2, les trois antennes $6_1$ à $6_3$ fournissent respectivement trois couples de grandeurs, respectivement l'amplitude $A_1$, $A_2$ et $A_3$ et la phase $\phi_1$, $\phi_2$ et $\phi_3$, du rayonnement électromagnétique détecté.

Les signaux de sortie des trois antennes sont envoyés dans une unité de traitement interférométrique 15, comportant des moyens de filtrage, d'amplification et de changement de fréquence (en 16), puis des moyens récepteurs VHF (en 17), et enfin des moyens de traitement analogique de phase (en 18) fournissant le cosinus (cos $\Delta\phi1_2$) et le sinus (sin $\Delta\phi1_2$) de l'angle de déphasage entre les signaux reçus par les antennes $6_1$ et $6_2$ et le cosinus (cos $\Delta\phi1_3$) et le sinus (sin $\Delta\phi1_3$) de l'angle de déphasage entre les signaux reçus par les antennes $6_1$ et $6_3$.

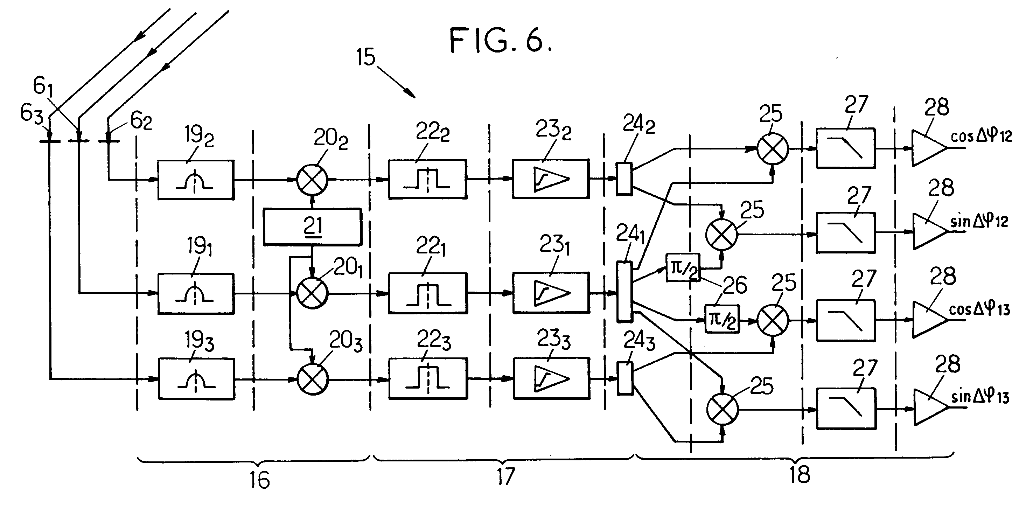

Une telle unité de traitement interférométrique 15 est déjà connu. Pour fixer les idées, un exemple de structure est représenté à la fig. 6. Les trois antennes $6_1$ à $6_3$, du type monopôle $\lambda/4$ sur plan, sont raccordées respectivement à trois filtres 19 appairés en phase ayant typiquement une bande passante de 10 MHz centrée sur une fréquence de 140 MHz. Ces filtres 19 sont respectivement raccordés à trois dispositifs de changement de fréquence 20 connectés également à un générateur de fréquence 21 de 170 MHz typiquement. Les dispositifs de changement de fréquence 20 sont raccordés respectivement à trois filtres à fréquence intermédiaire 22 appairés en phase et ayant typiquement une bande passante de 1 MHz centrée sur la fréquence de 30MHz. Ces filtres sont raccordés à trois amplificateurs limiteurs 23 ayant typiquement une dynamique de limitation de 80 dB, qui sont eux-mêmes connectés à trois répartiteurs 24. Ces derniers sont raccordés à quatre mélangeurs 25 soit directement pour les deux mélangeurs des voies cosinus, soit par l'intermédiaire de déphaseur de $\pi/2$ 26 (pour une de leurs entrées) pour les deux mélangeurs des voies sinus. Les mélangeurs sont enfin raccordés respectivement à quatre filtres à basses fréquences 27, ayant une bande passante typique d'environ 0-5 kHz, eux-mêmes raccordés respectivement à quatre amplificateurs de sortie 28.

Bien entendu, un circuit équivalent à deux voies est à utiliser dans le cas où la station est équipée d'un système de détection à seulement deux antennes.

En revenant à la fig. 2, les signaux fournis par l'unité de traitement interférométrique 15 sont ensuite traités numériquement, dans une unité de traitement numérique 29.

L'unité de traitement numérique 29 comprend tout d'abord un circuit de numérisation et de traitement 30 qui assure respectivement la conversion analogique/numérique des informations cos $\Delta\phi1_2$, sin $\Delta\phi1_2$, cos $\Delta\phi1_3$ et sin $\Delta\phi1_3$ et le calcul de la direction angulaire en site et/ou azimut de la source de rayonnement par rapport à la station.

Toutefois, toutes les informations ne sont pas systématiquement prises en compte et un tri des informations est simultanément effectué par validation des informations fournies par le circuit de numérisation et de traitement 30. La sélection se fait sur la base d'une détection d'amplitude du signal (circuit 31) et/ou d'une détection de sa densité d'émission (circuit 32) qui sont comparés (circuit de validation 33) à des seuils respectifs programmables (circuit de seuil 34).

La sélection en amplitude permet de donner un seuil d'acquisition et donc de définir une qualité de mesure (par sélection indirecte du rapport signal à bruit minimum). Elle peut être également considérée comme un moyen de limitation de la portée.

La sélection de densité d'émission, par contre, porte directement sur les mécanismes d'émission associés aux décharges atmosphériques. On peut définir cette densité d'émission dans la fenêtre de résolution temporelle de la mesure comme le pourcentage de temps pendant lequel le rayonnement est présent (par exemple nombre de microsecondes d'émission dans la fenêtre d'analyse de 100 $\mu$s).

Ce mode de sélection associé à une mesure finement résolue en temps (100 $\mu$s) permet d'accéder à l'extension spatiale des décharges. Les décharges de foudre présentent en effet, en cours de processus, des émissions intenses durant plusieurs centaines des microsecondes et s'étendant sur des distances pouvant dépasser la dizaine de kilomètres. La possibilité d'échantillonner ces décharges en plusieurs points (un pour chaque centaine de $\mu$s), associés avec la connaissance de la densité d'émission permet une reconstitution du trajet de la décharge et conduit donc à la connaissance de l'extension de la région de foudroiement.

La grande résolution temporelle de la mesure permet également de limiter la probabilité d'occurence, dans une même fenêtre temporelle, de décharges spatialement distinctes.

Enfin, le critère de sélection sur la densité d'émission peut permettre l'élimination de signaux parasites sporadiques.

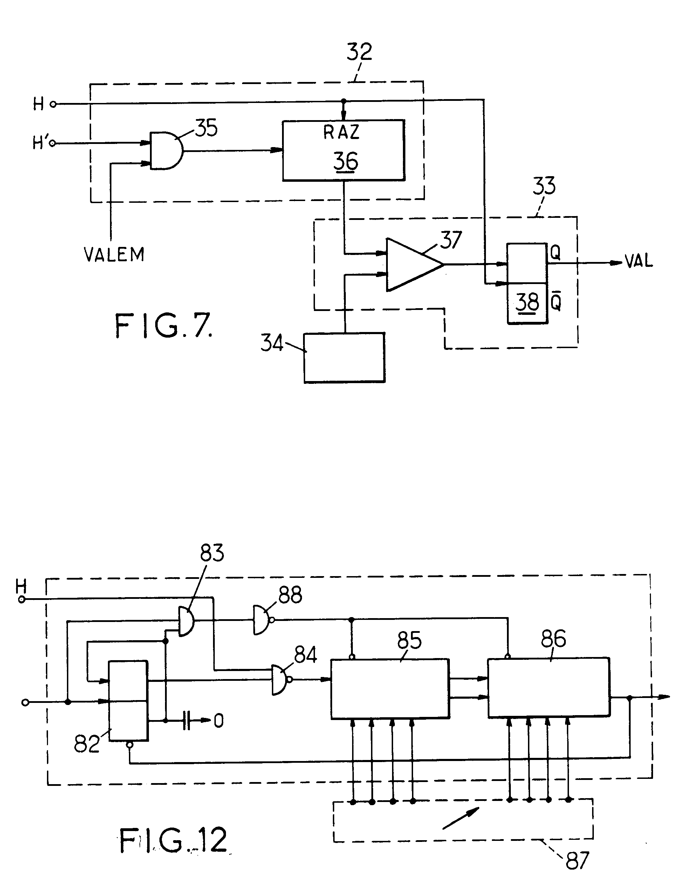

La figure 7 représente le schéma électronique d'un exemple de réalisation du circuit de validation. Le circuit 32 de détection de densité d'émission du signal comprend une porte ET 35 dont une entrée est connectée à une horloge H′ (non représentée) délivrant un signal de période T/N, T étant la période de récurrence des mesures et 1/N étant la résolution souhaitée pour ces mesures ; l'autre entrée de la porte ET 35 reçoit un signal logique VALEM qui vaut 1 quand il y a émission de rayonnements et 0 dans le cas contraire. La sortie de la porte ET 35 est connectée à une entrée d'un compteur 36 dont l'entrée de remise à zéro (RAZ) est reliée à une horloge H fournissant un signal de période T.

Quand il y a émission de rayonnement (signal VALEM = 1), le circuit ET 35 laisse passer le signal d'horloge H′ de période T/N dont les impulsions sont comptées par le compteur 36. A l'expiration de chaque période de temps T, le compteur 36 fournit un signal de sortie compris entre 0 et N représentatif de la densité d'émission mesurée sur la période T.

La sortie du compteur 36 est raccordée à l'entrée du circuit de validation 33, autrement dit à l'entrée d'un comparateur 37 dont l'autre entrée est raccordée au circuit de programmation de seuil 34. La sortie de comparateur 37 est connectée à l'entrée d'une bascule 38 de type D dont l'entrée d'horloge reçoit le signal d'horloge H de période T.

Le résultat de la comparaison apparaissant en sortie du comparateur 37 est donc mémorisé toutes les T secondes par la bascule 38 et le signal VAL apparaissant sur la sortie non inverseuse Q de celle-ci indique à tout moment si la mesure de la densité d'émission effectuée pendant la période précédente était supérieure (VAL = 1) au seuil affiché ou inférieure (VAL = 0) à ce seuil.

En outre, cette valeur de densité d'émission peut être conservée comme élément de caractérisation comme indiqué ci-après.

A partir des informations ainsi validées, on procède alors au calcul de la direction angulaire en azimut et/ou en site de la source de rayonnement par rapport à la station, en tenant compte des éventuelles corrections nécessaires (étalonnages, couplages entre antennes, effets d'environnement, etc.).

On procède alors au stockage, dans une mémoire 39, de données numériques constituées chacune par l'ensemble d'une information résultant du calcul précédemment effectué, d'une information relative à la date de l'émission (obtenue à partir d'une horloge synchrone 40 synchronisée avec celles des autres stations), et éventuellement d'une information de caractérisation qui, comme indiqué plus haut, peut être la valeur de la densité d'émission, ou la même fournie par un capteur permettant de caractériser la décharge.

Les données numériques ainsi constituées sont alors transmises (circuit de transmission 41) de toute façon appropriée, par exemple via un modulateur 42 de vitesse appropriée et une ligne téléphonique 43 normale ou spéciale, vers l'unité centrale d'acquisition de données 4.

La mémorisation des données en 39 permet d'étaler dans le temps la fourniture des données à transmettre aux moyens de transmission : ceux-ci n'ont donc pas à présenter une capacité de transmission trop importante et leur coût s'en trouve réduit d'autant.

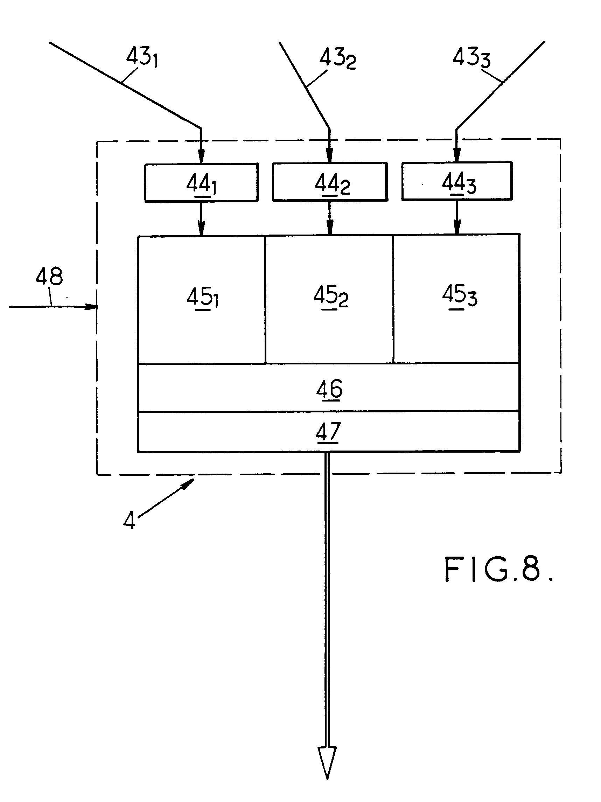

L'unité centrale d'acquisition de données 4, représentée à la fig. 8, reçoit simultanément, via par exemple des lignes téléphoniques respectives $43_1$, $43_2$ et $43_3$ et des démodulateurs respectifs $44_1$, $44_2$ et $44_3$, les données numériques en provenance des stations de mesure 1, 2 et 3, données qui sont affectées à des circuits d'acquisition $45_1$, $45_2$ et $45_3$ respectivement.

Une unité de tri 46 effectue un tri temporel des données ainsi reçues et ne conserve que les données numériques de même date communes à au moins deux stations et ces données sont réagencées, puis stockées en mémoire en 47 avant d'être fournies à l'unité 5 de traitement des données en temps réel. La présence des moyens de mémorisation 47 permet donc, là encore, d'étaler dans le temps la transmission des données vers l'unité de traitement 5 et donc d'adapter cette transmission à la capacité de calcul de cette unité 5, laquelle peut être moins largement dimensionnée et peut donc être moins coûteuse.

Bien entendu, la gestion de l'unité d'acquisition de données 4 est synchronisée à la même cadence que les unités de traitement des stations de localisation angulaire (liaison 48).

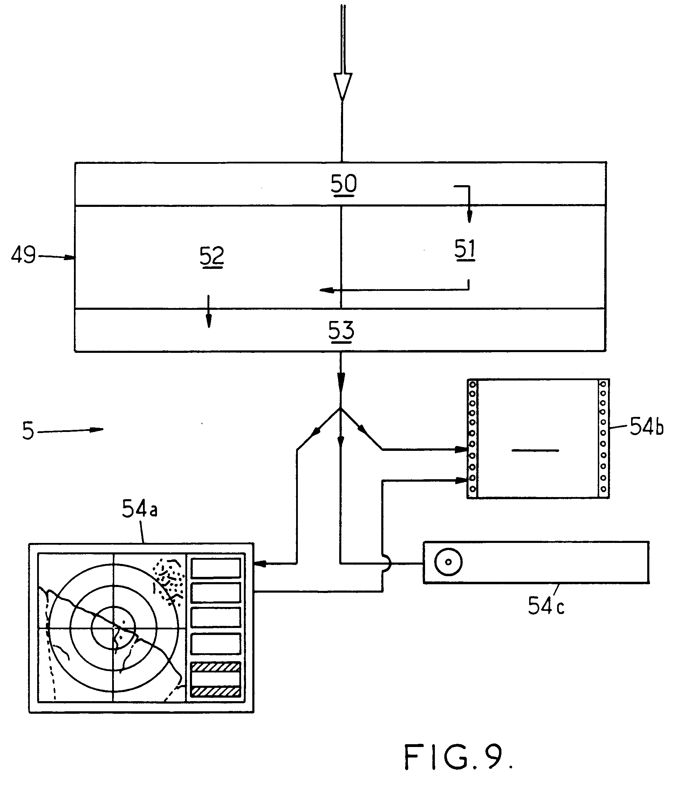

L'unité 5 de traitement des données en temps réel, représentée à la fig. 9, comprend une unité de calcul 49 qui reçoit et lit (en 50) les données en provenance de l'unité d'acquisition 4, prend en compte les diverses données d'étalonnage qui lui sont communiquées (en 51) et effectue (en 52) le calcul proprement de localisation de la source de rayonnement (décharge de foudre). Le calculateur central choisit les deux stations, parmi les trois, qui permettent la meilleure localisation (le critère retenu étant que la source à localiser se trouve en dehors de l'axe des deux stations retenues), les informations en provenance de la troisième servant alors de moyens de contrôle. Les résultats du calcul sont enfin mis en forme (en 53) de façon appropriée, puis dirigés vers des moyens d'affichage (par exemple affichage en temps réel sur écran 54a impression des données en temps réel en 54b, stockage des données en temps réel en 54c, etc.).

Bien entendu, aux moyens de traitement de données en temps réel dont il est question ci-dessus, il est possible d'adjoindre des moyens de traitement de données en temps différé, des moyens de traitement statistiques, ou autres (non représentés).

Il est donc nécessaire d'assurer la synchronisation des stations afin de recaler en temps les fenêtres temporelles d'acquisition sur les diverses stations. Cette synchronisation temporelle peut être utilisée des deux façons suivantes :

1 - pour compenser, si nécessaire, les différences de temps de propagation entre stations dans le cas de stations très éloignées, et donc faciliter et accélérer la mise en coïncidence temporelle des informations au niveau du système central ;

2 - pour améliorer la précision de localisation en combinant les localisations angulaires des diverses stations avec des mesures de différence de temps d'arrivée, entre stations. En effet, la mesure de différence de temps d'arrivée des signaux de foudre entre deux stations permet de définir la direction moyenne de la source (avec une précision fonction de la résolution temporelle de la mesure) ; cela limite donc le domaine angulaire de recherche pour chaque station et permet alors d'utiliser un système d'antennes ambigè mais présentant une meilleure résolution angulaire ; le levé d'ambiguïté se fait alors au niveau du système central par combinaison de la localisation angulaire et de la mesure de différence de temps d'arrivée.

A cette fin, chaque station de mesure est équipée d'une horloge pilotée par un oscillateur à quartz, destinée à dater les évènements parvenant à chacune des stations. A chaque mesure effectuée dans une station est alors affectée une date qui sera utilisée au dépouillement pour déterminer les ensembles de mesures synchrones. Ls stabilité des oscillateurs utilisés n'étant pas suffisante, il est nécessaire de les synchroniser périodiquement (par exemple une fois par seconde) par remise à zéro des compteurs horloges associés (40 sur la fig. 2).

Les "tops" de remise à zéro sont envoyés simultanément vers chaque station à partir d'un boîtier d'émission situé au niveau de l'unité centrale et un boîtier de réception prévu dans chaque station en assure la mise en forme et crée un retard destiné à compenser les retards différentiels apportés par les longueurs de ligne différentes entre l'unité centrale et les stations respectives.

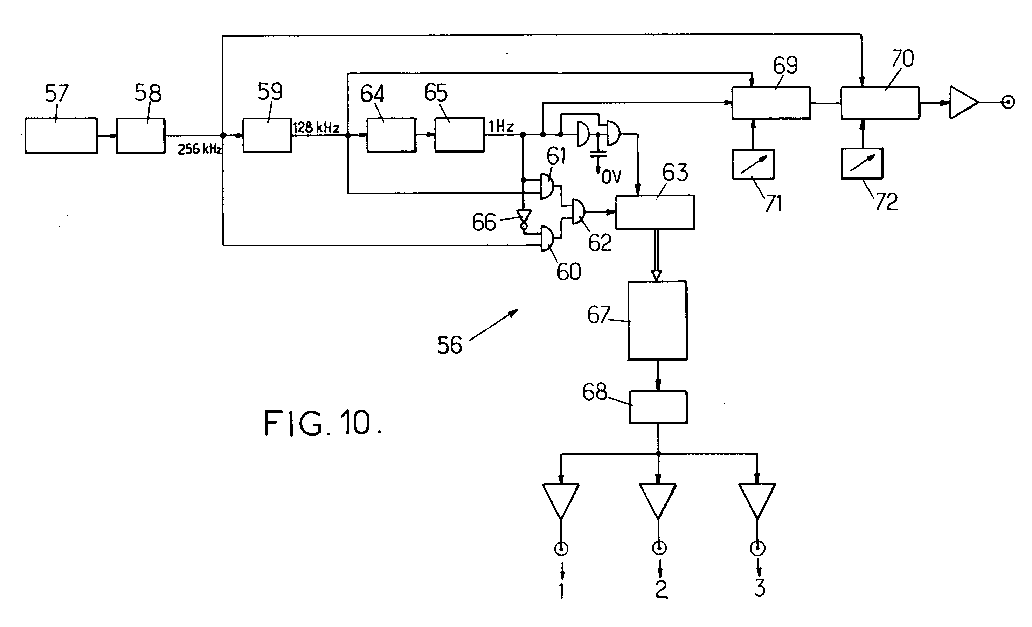

En se référant aux figures 10 à 12, on va maintenant décrire la constitution et le fonctionnement de tels boîtiers d'émission et de réception de signaux de synchronisation. Les signaux de synchronisation sont envoyés sur des lignes spécialisées (2 fils) reliant chacune des stations à l'unité centrale.

Les signaux de synchronisation émis sont des signaux carrés de fréquence 1 Hz, de rapport cyclique 1 et modulés en fréquence (le niveau 0 est modulé par une fréquence $f_1$ -par exemple 1000 Hz- et le niveau 1 est modulé par une fréquence $f_2$ -par exemple 2000 Hz-.

En se reportant tout d'abord à la fig. 10, le botîtier d'émission 56 comporte un oscillateur à quartz 57 (par exemple à la fréquence de 1,024 MHz) suivi d'un circuit diviseur par quatre 58 fournissant un premier signal à la fréquence de 256 kHz et lui-même suivi d'un circuit diviseur par deux 59 fournissant un second signal à la fréquence de 128 kHz. Les sorties de ces deux circuits diviseurs sont raccordés respectivment à une entrée de deux portes ET 60, 61 dont les sorties sont raccordées aux deux entrées d'une troisième porte ET 62 ayant sa sortie connectée à l'entrée d'un circuit diviseur par 128, 63.

En outre, la sortie du circuit diviseur par deux 59 est raccordée à un circuit diviseur par 128, 64, lui-même suivi d'un circuit diviseur par 1000, 60, dont la sortie, fournissant un signal de déclenchement à la fréquence de 1 Hz et de rapport cyclique 1, est raccordée d'une part à l'autre entrée de la porte ET 61 et, après inversion (circuit inverseur 66), à l'autre entrée de la porte ET 60 et, d'autre part, après mise en forme, à l'entrée de remise à zéro du circuit diviseur par 128, 63. Les trois portes ET 60, 61 et 62 constituent un circuit inverseur déclenché fournissant au circuit diviseur par 128, 63, un signal dont la fréquence est alternativement de 256 kHZ et 128 kHz pendant 500 ms.

Le diviseur par 128, 63 est câblé en compteur binaire à 7 bits et, à la sortie, un bus d'adresse est connecté à l'entrée d'adresse d'une mémoire EPROM 67 à 128 éléments dont la sortie est raccordée à un convertisseur numérique-analogique 68 raccordé en sortie à trois lignes de transmission vers respectivement les trois stations de mesure 1, 2 et 3.

En outre, un circuit de synchronisation ajustable comprend une première bascule monostable 69 dont l'entrée reçoit le signal de sortie, à fréquence de 1 Hz, du diviseur par 1000, 65, tandis que son entrée de déclenchement est connectée à la sortie du diviseur par 2, 59, et reçoit le signal de fréquence 128 kHz. La sortie de cette première bascule monostable est connectée à l'entrée d'une seconde bascule monostable 70 dont l'entrée de déclenchement est reliée à la sortie du diviseur par 4, 58, et reçoit le signal de fréquence 256 kHz. A chaque bascule monostable 69, 70 est connecté un circuit, respectivement 71, 72, permettant de régler la durée de l'impulsion de sortie, de telle sorte que le signal de sortie est, après amplification, un signal de synchronisation de fréquence 1 Hz envoyé avec un retard ajustable vers l'unité centrale pour synchroniser le fonctionnement de celle-ci avec les trois stations de mesure.

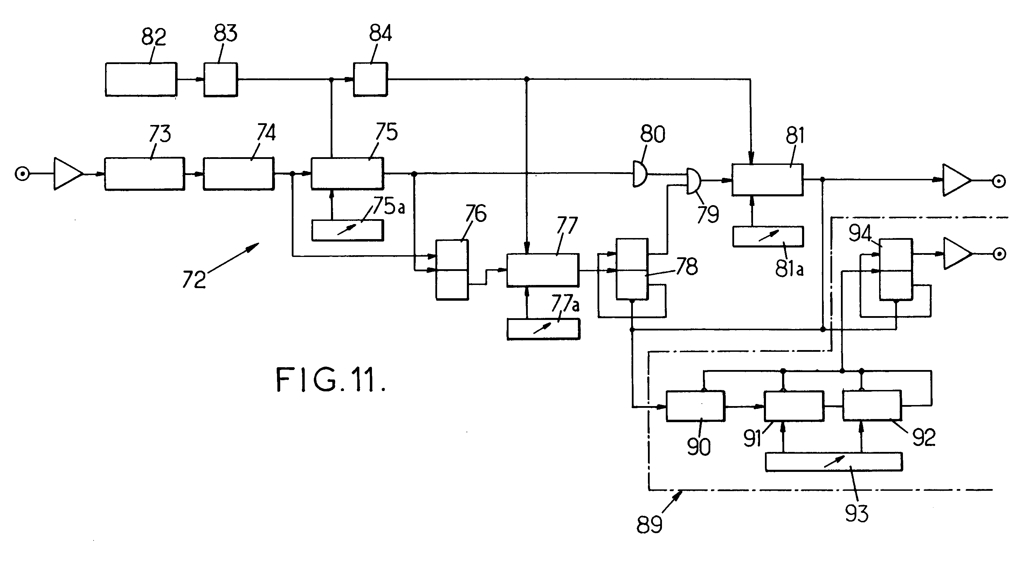

La figure 11 montre le schéma d'un boîtier 72 de réception des signaux de synchronisation, qui équipe chacune des stations 1, 2 et 3. Les impulsions de synchronisation reçues sont, après amplification, envoyées à un filtre passe-bande 73, puis mises en forme en 74, avant d'être appliquées à l'entrée d'une bascule monostable 75 ajustable par un circuit de réglage 75a et, simultanément, à une entrée d'une bascule 76 de type D dont l'entrée d'horloge reçoit le signal de sortie de la bascule monostable 75. La sortie inverseuse de la bascule 76 de type D est reliée à l'entrée d'une autre bascule monostable 77 réglable par un circuit d'ajustement 77a. La sortie de la bascule 77 est appliquée à l'entrée d'horloge d'une autre bascule 78 de type D dont la sortie inverseuse est bouclée sur l'entrée D et dont la sortie non inverseuse est reliée à une entrée d'une porte ET 79 dont l'autre entrée reçoit le signal de sortie de la bascule monostable 75 inversée par une porte ET 80. La sortie de la porte ET 79 est reliée à l'entrée d'encore une autre bascule monostable 81, ajustable par un circuit de réglage 81a, dont la sortie, après amplification, fournit les impulsions de synchronisation nécessaires au fonctionnement de la station de mesure.

La sortie de la bascule monostable 81 est connectée à l'entrée de remise à zéro de la bascule 78 de type D.

Une horloge à quartz 82 fournit un signal à la fréquence de 1 MHz qui, après division par deux par un circuit diviseur 83 (500 kHz), est, d'une part, appliqué à l'entrée d'horloge de la bascule monostable 75 et, d'autre part, après une nouvelle division par cinq par le circuit diviseur 84 (100 kHz), est appliqué aux entrées d'horloge respectives des bascules monostables 77 et 81.

Le circuit formé par la bascule monostable 75 et la bascule 76 de type D détecte l'instant de changement de fréquence dans le signal de synchronisation reçu. Le circuit formé par la bascule monostable 77 et la bascule 78 de type D permet de sélectionner une impulsion ultérieure (par exemple la cinquième après ce changement de fréquence), les premières impulsions suivant immédiatement le changement de fréquence étant affectées de sautillements ("jitter") et n'étant pas utilisables pour servir de référence. L'impulsion ainsi sélectionnée déclenche la bascule monostable 81 qui est programmable de manière à permettre une compensation du retard différentiel introduit par les durées de transmission différentes entre le boîtier d'émission et les boîtiers de réception respectifs des diverses stations de mesure.

Afin d'assurer une bonne stabilité et une bonne reproductibilité des retards entre les diverses stations de mesure, il est souhaitable que les bascules monostables utilisées soient des bascules monostables numériques, dont le schéma est fourni à la figure 12.

Chaque bascule monostable numérique comprend une bascule 82 de type D dont l'entrée d'horloge constitue l'entrée de la bascule monostable numérique, laquelle entrée est également raccordée à une entrée d'une porte ET 83 interdisant le redéclenchement du monostable. La sortie inverseuse de la bascule 82 est bouclée sur son entrée et raccordée également à l'autre entrée de la porte ET 83, tandis que sa sortie non inverseuse est connectée à une entrée d'une porte NON ET 84 dont l'autre entrée est raccordée à l'entrée d'horloge H du circuit de bascule monostable numérique. La sortie de la porte NON ET 84 est reliée à l'entrée d'un circuit de comptage, constitué par deux compteurs-décompteurs décimaux prépositionnables 85 et 86 (par exemple celui disponible sous la référence Texas Instrument 74 192) connectés en série, avec un circuit de prépositionnement 87, permettant un affichage du retard souhaité, agissant sur les bits de poids 1, 2, 4, 8, 16, 32, 64 et 128. La sortie du compteur, constituant la sortie de la bascule monostable numérique, est raccordée à l'entrée de remise à zéro de la bascule 82 de type D. De plus, la sortie de la porte ET 83 est raccordée, par l'intermédiaire d'une porte inverseuse 88, aux entrées d'horloge des compteurs 85 et 86.

Dans le circuit de bascule monostable qui vient d'être décrit, le compteur effectue un comptage entre 1 et 255. Si T est la période du signal d'horloge H, le retard qu'il sera possible d'introduire sur le signal d'entrée pourra être compris entre 1T et 255T avec une erreur inférieure ou égale à T.

Enfin, il est avantageux de prévoir des moyens d'étalonnage de chaque station de mesure, afin de pouvoir procéder au réglage de celle-ci en l'absence de décharges de foudre et aussi de pouvoir déterminer le déphasage propre introduit par chaque station de mesure et d'en tenir compte dans les calculs de localisation de source électromagnétique.

Un exemple d'un tel circuit de commande d'étalonnage est représenté en 89 à la figure 11. Il comprend un circuit diviseur par soixante 90 dont l'entrée est connectée à la sortie de la bascule monostable 81 et dont la sortie est raccordée à un circuit diviseur programmable, constitué par exemple par deux compteurs-décompteurs 91, 92 commandés par un circuit de prépositionnement 93 ; la sortie de ce circuit diviseur programmable est raccordée, d'une part, aux entrées d'horloge des compteurs-décompteurs 91, 92 et à l'entrée de remise à zéro du diviseur 90 et, d'autre part, à l'entrée d'horloge d'une bascule 94 de type D dont la sortie inverseuse est bouclée sur l'entrée et dont l'entrée de remise à zéro est connectée à la sortie de la bascule monostable 81. La sortie de la bascule 94 constitue, après adaptatation, la sortie de commande d'étalonnage de la station, raccordée à un émetteur $e_1$, $e_2$ et $e_3$ placé dans l'antenne $I_1$, $I_2$ et $I_3$ respectivement des stations 1, 2 et 3 (fig. 1). On déclenche ainsi, toutes les $\overline{p}$ minutes, une séquence d'étalonnage de durée $\overline{1}$ seconde, le nombre p étant programmable manuellement (en 93) de 0 $\overline{a}$ 255 minutes.

L'installation qui vient d'être décrite en référence aux figures 1 à 12 permet d'assurer la détection à distance de toute activité électrique notable susceptible de se déplacer vers un site ; cette activité est liée soit à des fronts convectifs, soit à des cellules isolées en mouvement ; cette première fonction est essentiellement une fonction de surveillance et de prévision à moyen terme, par exemple de l'ordre d'une heure ou de quelques heures, la distance nominale de détection de la zone active étant par exemple de l'ordre de 150 km.

L'activité électrique existante est détectée par le rayonnement électromagnétique créé par les foudroiements qui peuvent s'établir à intervalles de temps plus ou moins grands (de quelques seconde à quelques minutes).

L'équipement associé doit être en mesure de fournir un point de localisation par éclair détecté (éventuellement plusieurs si l'éclair est suffisamment énergétique et de grande extension) ; le point sera défini par sa distance au centre météorologique et par son azimut. La distance de détection sera par exemple de l'ordre de 150 km, donc homogène avec les distances d'observation par radar.

Les données seront traitées de deux façons :
- la détermination du nombre n de points par unité de temps permettra d'évaluer l'importance de l'activité électrique observée ;
- l'évolution de la répartition des points de localisation en fonction du temps renseignera sur les risques que le système orageux se dirige vers la proximité du site considéré.

Ces données permettront au centre de contrôle d'informer des responsables opérationnels du site à protéger pour :
- poursuivre ou interrompre des opérations jugées dangereuses (manipulation d'ergols, de dispositifs pyrotechniques, etc.) ;

- lancer ou non des opérations se déroulant sur des temps assez longs (plusieurs heures) ;
- apprécier les risques d'un foudroiement en vol d'un appareil volant (foudroiement direct ou de proximité) même si l'activité électrique au-dessus du site n'est pas particulièrement marquée.

Il est à noter que ces informations, traitées sur des périodes de temps assez longues, seront de nature à fournir une meilleure connaissance des phénomènes de type atmosphérique existant dans l'environnement du site et permettront, par comparaison avec des données de même nature obtenues sur d'autres sites, de mieux caractériser les conditions de fonctionnement du site considéré vis-à-vis de son environnement météorologique.

## Revendications

1. Installation pour la détection et la localisation spatiale par mesure interférométrique, en temps réel et à grande distance, des décharges de foudre, comprenant :
   - au moins deux stations (1, 2, 3) de localisation angulaire des décharges implantées à distance moyenne l'une de l'autre, chaque station comportant :
     / au moins deux antennes fixes (6, 7, 10) de réception d'au moins un rayonnement électromagnétique de longueur d'onde prédéterminée engendré par les susdites décharges de foudre et
     / des moyens (15) de traitement interférométrique des signaux délivrés par les antennes, agencés pour fournir une information représentative du site et/ou de l'azimut de la source de rayonnements électromagnétiques constituée par la décharge de foudre,
     / des moyens (31, 34) de validation à seuil sensibles à au moins une grandeur du rayonnement électromagnétique reçu (notamment sa densité d'émission et/ou son amplitude), agencés pour délivrer un signal de commande si ladite grandeur est supérieure à un seuil préétabli,
     / des moyens (30) de tri d'informations placés sous la dépendance des susdits moyens de validation à seuil, pour sélectionner les informations angulaires fournies par les moyens de traitement interférométrique uniquement lorsque la susdite grandeur est supérieure à sa valeur préétablie,

/ des moyens (30) de formation et de traitement de données numériques agences pour que chacune de ces données numériques soit constituée par une information représentative du site et/ou de l'azimut, sélectionnée par les moyens de tri, et par une information représentant la date de la décharge de foudre,

/ des moyens (31) de stockage momentané des données numériques ainsi constituées, ces moyens de stockage retenant lesdites données numériques pendant un temps fonction du débit de transmission possible,

/ et des moyens (41, 42) de transmission, dans une ligne de transmission, des données numériques ;

- des lignes de transmission ($43_1$, $43_2$, $43_3$) reliant respectivement les susdites stations de localisation à un centre (4) d'acquisition des données numériques ; ce centre (4) d'acquisition des données numériques, comprenant :

/ des moyens ($44_1$-$44_3$ ; $45_1$-$45_3$) de réception respectifs des données numériques en provenance des stations de localisation,

/ des moyens (46) pour trier et associer les informations ayant dans une plage de temps déterminée, la même date et provenant respectivement de stations de localisation différentes,

/ et des moyens (47) de stockage momentané des informations triées et associées, les moyens de stockage retenant ces informations pendant un temps fonction de la capacité de calcul ;

- des moyens de calcul (49) agencés pour déterminer par triangulation, à partir des informations de site et/ou d'azimut triées et associées, la position spatiale de la décharge de foudre survenue à ladite date;

- et des moyens (53-55) d'affichage des résultats fournis par les moyens de calcul ; caractérisée en ce que les moyens susmentionnés de validation à seuil sont sensibles notamment à la densité d'émission et comprennent :

- des moyens de comptage agencés pour effectuer un comptage pendant une durée prédéterminée T à partir de leur mise en marche,

- des moyens de détection de la présence, sur les antennes de réception, d'un rayonnement électromagnétique à détecter,

- des moyens de déclenchement, commandés par les susdits moyens de détection, pour déclencher la mise en marche des susdits moyens de comptage,

- des moyens comparateurs pour comparer le signal de sortie des moyens de comptage à la fin d'un temps T avec un seuil prédéterminé,

- et des moyens de mémorisation du résultat de cette comparaison présentant un premier niveau de tension si le comptage est inférieur au seuil prédéterminé ou un second niveau de tension si le comptage est supérieur audit seuil.

2. Installation selon la revendication 1, caractérisée en ce qu'elle comporte au moins trois stations de localisation angulaire (1, 2, 3) non mutuellement alignées, en ce qu'elle comporte en outre des moyens pour déterminer les deux stations aptes à fournir, à une date donnée, la position spatiale avec la meilleure précision, et en ce que les moyens de tri (46) du centre d'acquisition des données numériques (4) sont agencés pour sélectionner des couples d'informations de même date recueillies par les deux stations procurant à cette date la meilleure précision.

3. Installation selon la revendication 1 ou 2, caractérisée en ce que le rayonnement électromagnétique détecté possède une fréquence d'environ 140 MHz.

4. Installation selon l'une quelconque des revendications 1 à 3, caractérisée en ce que les stations de localisation possèdent respectivement des bases de temps (40) synchronisées (en 72) à partir d'une source de synchronisation commune (56) et des moyens (81) de prise en compte des retards respectifs subis par les signaux de synchronisation dans les lignes de transmission respectives.

5. Installation selon la revendication 4, caractérisée en ce que :

- la source de synchronisation commune comporte des moyens générateurs de signaux de synchronisation de forme sensiblement carrée, ayant une fréquence d'environ 1 Hz, de rapport cyclique sensiblement égal à 1 et modulé en fréquence, et des moyens de mémorisation qui contiennent des valeurs correspondant à une période élémentaire de la fréquence de modulation et qui sont adressés par un signal d'horloge constitué par le susdit signal de synchronisation,

- des moyens de liaison sont prévus entre la susdite source de synchronisation commune et les bases de temps respectives des stations de localisation pour transmettre auxdites bases de temps les signaux de sortie des moyens de mémorisation,

- et chaque base de temps (72) d'une station de localisation comprend :
  / des moyens (73, 74) de filtrage et de mise en forme du signal reçu,
  / des moyens (75, 76) de détermination des instants de changement de fréquence dudit signal reçu,
  / des moyens (77, 78) de sélection pour sélectionner dans ce signal un signal stable de synchronisation,
  / des moyens de retard (81), couplés avec les moyens susmentionnés de prise en compte du retard introduit par la durée de la transmission dans les susdits moyens de liaison par rapport à la durée de transmission dans les moyens de liaison avec les autres stations de localisation,
  / et des moyens de sortie d'un signal, stable et compensé, de synchronisation de base de temps.

6. Installation selon l'une quelconque des revendications 1 à 5, caractérisée en ce que chaque stations de localisation comporte trois antennes simples (61, 62, 63) omnidirectionnelles en azimut, ces antennes étant disposées en triangle et étant choisies parmi les types monopôle λ/4 sur plan, monopôle 5 λ/8 sur plan ou dipôle λ/2 (λ étant la longueur d'onde du rayonnement électromagnétique à détecter).

7. Installation selon la revendication 6, caractérisée en ce que les antennes présentent une directivité en site relativement faible, notamment inférieure ou égale à 3 dB.

8. Installation selon l'une quelconque des revendications 1 à 7, caractérisée en ce que chaque station de localisation comporte des antennes directionnelles en azimut (7, 10) notamment agencées pour une détection dans un domaine angulaire limité ou bien agencées pour une détection isotrope en azimut par combinaison de plusieurs antennes pointées dans des directions complémentaires.

9. Installation selon l'une quelconque des revendications 1 à 8, caractérisée en ce que les antennes de chaque station sont mutuellement écartées d'environ une demi-longueur d'onde du rayonnement à détecter.

10. Installation selon l'une quelconque des revendications 1 à 9, caractérisée en ce qu'elle comprend en outre au centre d'acquisitions des données numériques des moyens pour déterminer les différences de temps d'arrivée entre stations de localisation différentes et en ce que les moyens de calcul sont agencés pour utiliser ces informations de différences de temps d'arrivée conjointement avec les autres informations de site et/ou d'azimut triées et associées, de manière qu'il soit possible d'effectuer la localisation de la source de rayonnement électromagnétique constituée par la décharge de foudre à partir d'un système d'antennes ambigu, mais conférant une meilleure résolution angulaire.

11. Installation selon l'une quelconque des revendications 1 à 10, caractérisée en ce qu'elle comporte en outre des moyens de commande d'étalonnage (89), incluant un émetteur propre de rayonnements électromagnétiques de la fréquence à détecter et des moyens de détection et de calcul du déphasage propre de l'installation, ce grâce a' quoi il est possible d'en corriger les mesures.

**Claims**

1. Installation for the detection and the spatial localization by interferometric measurement, in real time and at a great distance, of lightening strikes, comprising:
   - at least two strike angular localisation stations (1, 2, 3) situated at a moderate distance from one another, each station comprising :
     / at least two fixed antennae (6, 7, 10) for reception of at least one electromagnetic radiation of predetermined wavelength generated by said lightening strikes, and
     / means (15) for interferometric process of signals delivered by the antennae, arranged to provide information representative of the elevation and/or azimuth of the electromagnetic radiation source constituted by the lightening strike,
     / threshold validation means (31, 34) sensitive to at least one parameter of said received electromagnetic radiation (particularly its density of emission and/or its amplitude), arranged to deliver an actuating signal if said parameter is greater than a predetermined threshold,

/ data sorting means (30) placed under the dependance of said threshold validation means, to select the angular data provided by said interferometric processing means only when said parameter is greater than its predetermined value,

/ numerical data formation and processing means arranged so that each of said numerical data is constituted by information representative of the elevation and/or azimuth, selected by said sorting means, and by information representing the date of the lightening strike,

/ momentary storage means (31) for storing said numerical data thus constituted, said storage means retaining said numerical data for a time which is a function of the possible transmission flow rate,

/ and transmission means (41, 42), in a transmission line, for said numerical data ;

- transmission lines ($43_1$, $43_2$, $43_3$) connecting respectively said localization stations to a numerical data acquisition center (4) ; said numerical data acquisition center comprising :

/ respective receiving means ($44_1$-$44_3$ ; $45_1$-$45_3$) for said numerical data coming from said location stations,

/ means (46) for sorting and associating informations having, in a predetermined time span, the same date and coming respectively from different location stations,

/ and momentary storage means (47) for the sorted and associated informations, said storage means retaining said informations for a time which is a function of the calculating capacity ;

- calculating means (49) arranged to determine by triangulation, from said sorted and associated informations on elevation and/or azimuth, the spatial position of the lightening strike which occured at said date ;

- and display means (53-55) for displaying results provided by said calculating means ; characterized in that said above-mentioned threshold validation means are sensitive particularly to the emission density and comprise :

- counting means arranged to perform counting during a predetermined period T from their placing in operation,
- detection means for detecting the presence, at the receiving antennae, of an electromagnetic radiation to be detected,
- triggering means, actuated by said detection means, to trigger the starting of said counting means,
- comparator means to compare the output signal from the counting means at the end of a time T with a predetermined threshold,
- and memorizing means for storing the result of said comparison having a first voltage level if the counting is less than the predetermined threshold or a second voltage level if the counting is higher than said threshold.

2.  Installation according to claim 1, characterized in that it comprises at least three angular localization stations (1, 2, 3) not mutually aligned, that further comprises means for determining the two stations adapted to provide, at a given date, said spatial position with the best precision, and that said sorting means (46) of said numerical data acquisition center (4) are arranged to select pairs of data having the same date collected by said two stations procuring the best precision at this date.

3.  Installation according to claim 1 or 2, characterized in that the detected electromagnetic radiation has a frequency of about 140 MHz.

4.  Installation according to anyone of claims 1 to 3, characterized in that said localisation stations have respectively time bases (40) synchronized (72) from a common synchronization source (56) and means (81) for taking into account respective delays undergone by the synchronization signals in said respective transmission lines.

5.  Installation according to claim 4, characterized by that :

- said common synchronization source comprises means for generating synchronization signals having a substantially square form, having a frequency of about 1 Hz, with a cyclic ratio substantially equal to 1 and frequency modulated, and memorizing means which contain values corresponding to an elementary period of the modulation frequency and which are addressed by a clock signal constituted by said synchronization source and the respective time bases of the localization stations to transmit to said time bases the output signals from the memorization means,

- and each time base (72) of a localization station comprises :
  / filtering and forming means (73, 74) for the received signal,
  / means (75, 76) for determing moments of frequency change of said received signal,
  / selection means (77, 78) to select in said signal a stable synchronization signal,
  / delay means (81), coupled with said means for taking into account the delay introduced by the duration of the transmission in said connecting means with respect to the duration of transmission in the connecting means with the other localization stations,
  / and output means of a stable and compensated time base synchronization signal.

6. Installation according to anyone of claims 1 to 5, characterized in that each localization station comprises three simple antennae (61, 62, 63) omnidirectional in azimuth, said antennae being arranged in a triangle and being selected from among the types monopole /4 on a plane, monopole 5 /8 on a plane or dipole /2 ( being the wavelength of the electromagnetic radiation to be detected).

7. Installation according to claim 6, characterized in that said antennae have a directivity in elevation which is relatively low, particularly less than or equal to 4 dB.

8. Installation according to anyone of claims 1 to 7, characterized in that each localization station comprises antennae (7, 10) directional in azimuth particularly arranged for detection in a limited angular field or arranged for detection isotropic in azimuth by combination of several antennae pointed in complementary directions.

9. Installation according to anyone of claims 1 to 8, characterized in that the antennae of each station are mutually spaced by about one-half wavelength of the radiation to be detected.

10. Installation according to anyone of claims 1 to 9, characterized in that it further comprises, at said numerical data acquisition center, means for determining differences in arrival time between different localization stations and that said calculating means are arranged to use said data of differences in arrival time conjointly with said other sorted and associated data of elevation and/or azimuth, so that it is possible to perform the localization of the electromagnetic radiation source constituted by the lightening strike from an ambiguous antennae system, but conferring better angular resolution.

11. Installation according to anyone of claims 1 to 10, characterized in that it further comprises calibration actuating means (89), including an respective emitter for emission of electromagnetic radiations having the frequency to be detected and means for detection and calculation of the own phase difference of said installation, whereby a correction of measurements thereof is possible.

**Patentansprüche**

1. Einrichtung zum Detektieren und zur räumlichen Ortung von Blitzentladungen in Echtzeit und auf große Entfernungen durch interferometrische Messung, umfassend:
   - wenigstens zwei für die Winkelordnung von Entladungen bestimmte Stationen (1,2,3), welche mit mittlerem Abstand zueinander aufgestellt sind, wobei jede Station umfaßt:
     - wenigstens zwei feste Antennen (6,7,10) zum Empfangen wenigstens einer elektromagnetischen Strahlung mit vorgegebener Wellenlänge, welche von den genannten Blitzentladungen verursacht wird, und
     - Mittel (15) zur interferometrischen Verarbeitung der von den Antennen gelieferten Signale, wobei diese Mittel für die Lieferung einer für den Ort und/oder den Azimut der Quelle elektromagnetischer Strahlung, die von der Blitzentladung gebildet wird, repräsentativen Information eingerichtet sind,
     - Mittel (31,34) zur Bildung eines Schwellenwertes, welche auf wenigstens eine Größe der empfangenen elektromagnetischen Strahlung (insbesondere deren Ausgangsdichte und/oder deren Amplitude) ansprechen, wobei diese Mittel ein Steuersignal liefern, wenn diese Größe über einem vorgegebenen Schwellenwert liegt,

- Mittel (30) für die Auswahl von Informationen, welche in einer Abhängigkeit von den genannten Mitteln zur Schwellenwertbildung angeordnet sind und dazu dienen, die von den Mitteln zur interferometrischen Verarbeitung gelieferten Winkelinformationen nur dann auszuwählen, wenn die genannte Größe oberhalb eines voreingestellten Wertes liegt,

- Mittel (30) zum Erstellen und Verarbeiten von numerischen Daten, welche so eingerichtet sind, daß alle diese numerischen Daten aus einer Information gebildet sind, die representativ für den Ort und/oder den Azimut ist und von den Informationsauswahlmitteln ausgewählt wurde, sowie aus einer Information, die den Zeitpunkt der Blitzentladung representiert,

- Mittel (31) zum vorübergehenden Speichern der so gebildeten numerischen Daten, wobei diese Speichermittel die numerischen Daten für eine Zeit halten, die von der möglichen Übertragungsrate abhängt,

- und Mittel (41,42) zum Übertragen von numerischen Daten über eine Übertragungsleitung;

- Übertragungsleitungen ($43_1$, $43_2$, $43_3$), welche jeweils die genannten Ortungsstationen mit einem Erfassungszentrum (4) für numerische Daten verbinden, wobei das Erfassungszentrum (4) für die numerischen Daten umfaßt:

- Mittel ($44_1$-$44_3$ ; $45_1$-$45_3$) zum jeweiligen Empfangen der von den Ortungsstationen kommenden numerischen Daten,

- Mittel (46) zum Auswählen und Zusammenstellen der Informationen, die innerhalb eines bestimmten Zeitbereichs den gleichen Zeitpunkt haben und die jeweils aus unterschiedlichen Ortungsstationen kommen,

- und Mittel (47) zum vorübergehenden Speichern von ausgewählten und zusammengestellten Informationen, wobei diese Speichermittel diese Informationen für eine Zeit halten, die von der Rechenkapazität abhängt;

- Rechenmittel (49), die dazu eingerichtet sind, mittels Triangulation aus den ausgewählten und zusammengestellten Orts- und/oder Azimutinformationen die räumliche Position der zu diesem Zeitpunkt erfolgten Blitzentladung zu bestimmen,

- und Mittel (53-55) zum Anzeigen der von den Rechenmitteln gelieferten Resultate;

dadurch **gekennzeichnet,** daß die genannten Schwellenwertbildungsmittel vor allem auf die Emissionsdichte ansprechen und umfassen:

- Zählmittel zur Durchführung einer Zählung während einer vorgegebenen Zeitdauer T vom Beginn ihrer Inbetriebsetzung,

- Mittel zum Detektieren der Anwesenheit einer festzustellenden elektromagnetischen Strahlung an den Empfangsantennen,

- Einschaltmittel, welche von den genannten Detektormitteln gesteuert werden und welche zum Auslösen des Betriebes der genannten Zählmittel dienen,

- Komparatormittel zum Vergleichen des Ausgangssignals der Zählmittel am Ende einer Zeit T mit einem vorgegebenen Schwellenwert,

- und Mittel zum Speichern des Resultates dieses Vergleiches, welches eine erste Spannungsgröße darstellt, wenn das Zählergebnis kleiner als der vorgegebene Schwellenwert ist, und eine zweite Spannungsgröße, wenn das Zählergebnis größer als der Schwellenwert ist.

2. Einrichtung nach Anspruch 1, dadurch **gekennzeichnet,** daß sie wenigstens drei Winkelortungsstationen (1,2,3) umfaßt, die nicht zueinander ausgerichtet sind, daß sie außerdem Mittel zum Bestimmen derjenigen beiden Stationen umfaßt, die in der Lage sind, zu einem bestimmten Zeitpunkt die räumliche Position mit der größten Genauigkeit anzugeben, und daß die Auswählmittel (46) des Erfassungszentrums (4) für numerische Daten dazu eingerichtet sind, Paare von Informationen eines gleichen Zeitpunktes auszuwählen, die von den beiden Stationen empfangen werden, welche zu diesem Zeitpunkt die größte Genauigkeit bieten.

3. Einrichtung nach Anspruch 1 oder 2, dadurch **gekennzeichnet,** daß die detektierte elektromagnetische Strahlung eine Frequenz von ungefähr 140 MHz hat.

4. Einrichtung nach einem der Ansprüche 1 bis 3, dadurch **gekennzeichnet,** daß die Ortungsstationen jeweils Zeitbasen (40) haben, die von einer gemeinsamen Synchronisationsquelle (56) aus synchronisiert sind (in 72), sowie Mittel (81) zur Berücksichtigung jeweiliger Verzögerungen, denen die Synchronisationssignale in den jeweiligen Übertragungsleitungen unterliegen.

5.	Einrichtung nach Anspruch 4, dadurch **gekennzeichnet,**
- daß die gemeinsame Synchronisationsquelle Mittel zum Erzeugen von Synchronisationssignalen von im wesentlichen rechteckiger Form mit einer Frequenz von ungefähr 1 Hz und mit einem Taktverhältnis von im wesentlichen 1 sowie und einer Frequenzmodulation umfaßt, sowie Speichermittel, welche Wert enthalten, die einer Elementarperiode der Modulationsfrequenz entsprechen und die durch ein Taktsignal adressiert werden, das von dem genannten Synchronisationssignal gebildet ist,
- daß Verbindungsmittel zwischen der genannten gemeinsamen Synchronisationsquelle und den jeweiligen Zeitbasen der Ortungsstationen vorgesehen sind, um den Zeitbasen die Ausgangssignale der Speichermittel zu übertragen,
- und daß jede Zeitbasis (72) einer Ortungsstation umfaßt:
  - Mittel (73, 74) zum Filtern und zur Formung des erhaltenen Signals,
  - Mittel (75, 76) zum Bestimmen der Zeitpunkte eines Frequenzwechsels des empfangenen Signals,
  - Auswahlmittel (77, 78) zum Auswählen eines stabilen Synchronisationssignals aus diesem Signal,
  - Verzögerungsmittel (81), welche mit den genannten Mitteln gekoppelt sind, durch die die Verzögerungen, welche durch die Dauer der Übertragung über die genannten Verbindungsmittel verursacht werden, mit Bezug auf die Übertragungsdauer in den Verbindungsmitteln mit den anderen Ortungsdaten in Betracht gezogen werden, und
  - Mittel zum Ausgeben eines stabilen und kompensierten Synchronisationssignals der Zeitbasis.

6.	Einrichtung nach einem der Ansprche 1 bis 5, dadurch **gekennzeichnet,** daß jede Ortungsstation drei einfache, omnidirektionelle Azimut-Antennen (61,62,63) hat, wobei diese Antennen zu einem Dreieck angeordnet und aus den Typen Einpol $\lambda/4$ in der Ebene, Einpol 5 $\lambda/8$ in der Ebene oder Dipol $\lambda/2$ ausgewählt sind (wobei $\lambda$ die Wellenlänge der zu detektierenden elektromagentischen Strahlung ist).

7.	Einrichtung nach Anspruch 6, dadurch **gekennzeichnet,** daß die Antennen eine relativ schwache Ort-Richtfähigkeit, insbesondere eine geringere als oder gleich 3dB haben.

8.	Einrichtung nach einem der Ansprüche 1 bis 7, dadurch **gekennzeichnet,** daß jede Ortungsstation Azimut-Richtantennen (7, 10) hat, die insbesondere für eine Detektierung in einem begrenzten Winkelbereich oder für eine isotrope Azimutdetektierung durch Kombination mehrerer in komplementäre Richtungen weisender Antennen ausgelegt sind.

9.	Einrichtung nach einem der Ansprüche 1 bis 8, dadurch **gekennzeichnet,** daß die Antennen jeder Station einen gegenseitigen Abstand von ungefähr einer halben Wellenlänge der zu detektierenden Strahlung haben.

10.	Einrichtung nach einem der Ansprüche 1 bis 9, dadurch **gekennzeichnet,** daß sie außerdem im Erfassungszentrum für die numerischen Daten Mittel zum Bestimmen der Unterschiede bei den Ankunftszeiten zwischen den unterschiedlichen Ortungsstationen umfaßt und daß die Rechenmittel dazu ausgelegt sind, die Informationen über die unterschiedlichen Ankunftszeiten gemeinsam mit den übrigen ausgewählten und zusammengestellten Orts- und Azimutinformationen zu verwenden derart, daß es möglich ist, die Ortung der von der Blitzentladung gebildeten Quelle elektromagnetischer Strahlung mit einem System ungerichteter Antennen durchzuführen und dennoch eine bessere Winkelauflösung zu gewährleisten.

11.	Einrichtung nach einem der Ansprüche 1 bis 10, dadurch **gekennzeichnet,** daß sie außerdem Mittel (89) zum Steuern einer Eichung umfaßt, welche einen eigenen Sender elektromagnetischer Strahlung der zu detektierenden Frequenz sowie Mittel zum Detektieren und Berechnen der Phasenabweichung der Einrichtung selbst einschließt, dank derer es möglich ist, deren Messungen zu korrigieren.

FIG.1.

EP 0 252 807 B1

FIG.2.

# FIG.3.

# FIG.4.

# FIG.5.

FIG. 6.

cos Δψ₁₂

sin Δψ₁₂

cos Δψ₁₃

sin Δψ₁₃

EP 0 252 807 B1

FIG.7.

FIG.12

FIG.8.

FIG.9.

FIG. 10.

FIG.11.

EP 0 252 807 B1